# EUROPEAN PATENT APPLICATION

(11) **EP 3 280 036 A1**
(43) Date of publication of application: **07.02.2018**
(21) Application number: 17778550.8
(22) Date of filing: 14.02.2017
(51) Int. Cl.: H02K 7/10, H02K 7/116, H02K 7/18

(54) **MOTOR, MOTOR SYSTEM, AND CHARGING AND BRAKING METHOD**

(30) Priority: 08.04.2016 CN 201610218309
(71) Applicant: Beijing Mobike Technology Co., Ltd., Beijing 100125 (CN)
(72) Inventor: XU, Hongjun, Beijing 100125 (CN); WU, Jun, Beijing 100125 (CN)
(74) Representative: Rau, Schneck & Hübner Patentanwälte Rechtsanwälte PartGmbB
(86) International application number: PCT/CN2017/073454
(87) International publication number: WO 2017/173885

(57) **Abstract**

A motor for a vehicle, a motor system comprising the motor, and a charging and braking method using the motor system are disclosed. The motor comprises: a clutch unit, a planetary gear train, a rotor, a magnetic steel, and a stator fixedly connected with the magnetic steel, wherein the clutch unit is configured to transmit a rotational torque between a wheel axle and the planetary gear train; the planetary gear train is arranged on the wheel axle in a sleeving manner and capable of driving the rotor to rotate by using force transmitted from the clutch unit, or transmitting the rotation of the rotor to the clutch unit; wherein during travelling of the vehicle, the motor utilizes an induced current generated in the coils through the movement of the rotor relative to the stator to charge a battery of the vehicle; and the motor utilizes induced inverse potential generated in the coils through the movement of the rotor relative to the stator to brake the vehicle after the vehicle receives a braking signal. The motor is advantageous in compact structure and ease to maintain.

## Description

### FIELD OF THE INVENTION

The present invention relates to a multi-functional motor system for a vehicle, and more particularly, to a motor mounted on a wheel axle of the vehicle, a motor system comprising the motor, and a charging and braking method using the motor system.

### BACKGROUND OF THE INVENTION

Bicycles, as daily transportation tools, are becoming the first choice for people to travel in an energy-saving, environmental-protection and low-carbon way with their advantages of energy saving, environmental protection, realizing exercise and the like. Accordingly, various bicycle peripherals, which need electric power as a driving source, such as a bicycle navigator, a travel recorder, motion monitoring equipment, a loudspeaker, a decorative lamp and the like, also have attracted more and more attention and love from people. Since a bicycle does not have a power device such as an engine or a generator, these bicycle peripherals only can be powered by a battery of the bicycle. However, excessive battery consumption brings inconvenience to users, and may cause energy waste and environmental pollution, which is contrary to the original intention of the low-carbon and environmental-protection travel way. The prior art has provided a hub motor mounted on a hub of a wheel and utilizing the wheel rotation to generate power. For example, the Chinese utility model patent NO. 201420198304.9 may be referred to. But, the current hub motor is limited by a mounting space as its structure is complex and not compact enough.

In addition, the performance of a brake, as an essential safety device for a bicycle and other vehicles, determines a user travel safety factor to a large extent. At present, common bicycle brakes comprise a V-shaped brake, a disc brake, a roller brake and the like. However, these brakes work by using a mechanical contact braking mode, such as friction, tooth clamping, or the like. Therefore, if the brakes are used for a long time or maintained improperly, it is possible to have problems of brake failure and the like caused by element wear.

The above problems exist not only in the bicycle, but in any vehicle with wheels, such as a motorcycle, an electric vehicle, an automobile or the like.

### SUMMARY OF THE INVENTION

The present invention is developed based on the above technical problems. That is, there is provided a motor for a vehicle, a motor system comprising the motor, and a braking and charging method of the vehicle by using the motor system. The motor has the characteristics of being compact in structure and capable of realizing reliable braking.

According to a first aspect of the present invention, there is provided a motor for a vehicle. The motor comprises: a clutch unit, a planetary gear train, a rotor, a magnetic steel, and a stator fixedly connected with the magnetic steel, wherein the clutch unit is fixed to a wheel axle of the vehicle, and configured to transmit a rotational torque between the wheel axle and the planetary gear train; the planetary gear train is arranged on the wheel axle in a sleeving manner and is capable of driving the rotor to rotate by using force transmitted from the clutch unit, or transmitting the rotation of the rotor to the clutch unit; the magnetic steel is fixed to the rotor and rotates or stops rotating with a sun gear in the planetary gear train together; a plurality of coils is wound round the stator, and an induced current is generated in the coils when the rotor rotates relatively to the stator. During travelling of the vehicle, the motor is configured to charge a battery of the vehicle by utilizing a first induced current generated in the coils through the movement of the rotor relative to the stator. During braking of the vehicle, the motor utilizes a second induced current generated in the coils through the movement of the rotor relative to the stator as well as an induced magnetic field further generated through the second induced current to brake the vehicle.

Further, the motor also comprises a housing configured to accommodate and enclose the clutch unit, the planetary gear train, the rotor, the magnetic steel and the stator.

Further, the clutch unit comprises a clutch and a clutch bracket.

Further, the clutch and the clutch bracket are fixedly connected or integrally formed.

Further, the planetary gear train comprises a sun gear, a planetary gear, a planetary gear carrier and an inner gear ring, wherein the planetary gear is supported by a planetary shaft arranged on the planetary gear carrier, and performs planetary rotation around the sun gear; and the planetary gear carrier is fixed to the clutch unit, so as to transmit a rotational torque between the planetary gear and the clutch unit.

Further, the planetary gear train comprises a sun gear, a planetary gear, a planetary gear carrier and an inner gear ring, wherein the planetary gear is supported by a planetary shaft arranged on the planetary gear carrier, and performs planetary rotation around the sun gear; and the planetary gear carrier is fixed to the clutch bracket, so as to transmit a rotational torque between the planetary gear and the clutch unit.

Further, the sun gear and the rotor are fixed or integrally formed.

Further, the magnetic steel is annular and arranged on the outer periphery of the stator in a sleeving manner, so that an induced current is generated in the coils when the rotor moves relatively to the stator.

Further, a plurality of bobbins is arranged on the stator in the axial direction thereof, and the coils are wound round the bobbins.

According to a second aspect of the present invention, there is provided a motor system comprising: any of the above-described motors, and a control unit configured to control the motor to charge the battery of the vehicle or to brake the vehicle.

According to a third aspect of the present invention, there is provided a braking and charging method using the motor system. The method comprises: rotating a wheel axle of the vehicle during travelling of the vehicle, and transmitting the rotation of the wheel axle by the clutch unit to the planetary gear train to further drive the rotor to rotate; sensing by the coils on the stator a change of a magnetic field to generate a first induced current in the coils, and charging the battery with the first induced current; during performing a braking operation, controlling the motor by a/the control unit, so that a second induced current generated in the coils generates another induced magnetic field when the rotor moves relatively to the stator, and a braking force for preventing the movement of the rotor relative to the stator is generated between the induced magnetic field and an existing magnetic field; and enabling the rotor to decelerate using the braking force, transmitting the deceleration movement to the clutch unit by the planetary gear train, and transmitting by the clutch unit the deceleration movement to the wheel axle of the vehicle to realize the braking operation.

### [Effects of the present invention]

By arranging the planetary gear train in the motor as a transmission structure, the rotation of the wheel axle is transmitted to the planetary gear train through the clutch unit, so that the rotor moves relatively to the stator to charge the battery. Meanwhile, after a user braking operation is received, the motor is controlled to enable the rotor to move relatively to the stator, so as to generate an induced current in the coils, and further, an acting force preventing the rotation of wheels is generated to brake the vehicle. The motor with the above-described structure has the beneficial effects that the structure is compact, the size in the axial direction is small, the braking effect is reliable, the system is simple to maintain, and the battery is charged while braking, so that an energy-saving purpose is achieved.

The advantageous effects of the present invention will become apparent further from following detailed description of implementations according to the present invention with reference to the drawings.

### BRIEF DESCRIPTION OF THE DRAWINGS

Fig. 1 shows a structural block diagram of a motor system with power generation and braking functions for a bicycle;
Fig. 2 shows a structural block diagram of a control circuit according to a preferred embodiment of the present invention;
Fig.3 is an exploded view of a structure of a permanent magnet brushless direct current (DC) motor according to a preferred embodiment of the present invention;
Fig. 4 is an axial sectional view of the permanent magnet brushless DC motor according to a preferred embodiment of the present invention;
Fig.5 is a schematic view of a stator and a distribution manner of coils wound round the same according to a preferred embodiment of the present invention; and
Fig. 6 is a schematically structural view of an inverter circuit according to a preferred embodiment of the present invention.

### DETAILED DESCRIPTION OF THE EMBODIMENTS

The present invention will now be described in detail with reference to the drawings based on specific implementations. For clarity, parts or structures known to those skilled in the art are not specifically described herein. In addition, although the present invention is described with reference to the specific implementations, it should be understood that such description is not intended to limit the present invention within the described implementations. On the contrary, such description is intended to encompass all substitutions, improvements and equivalent solutions within the spirit and scope of the present invention defined in the appended claims.

Although an example in which a motor system is mounted on a wheel axle of a bicycle is taken to illustrate, of course, this system can be applied to any vehicle such as an electric bicycle, a motorcycle, an automobile, or the like.

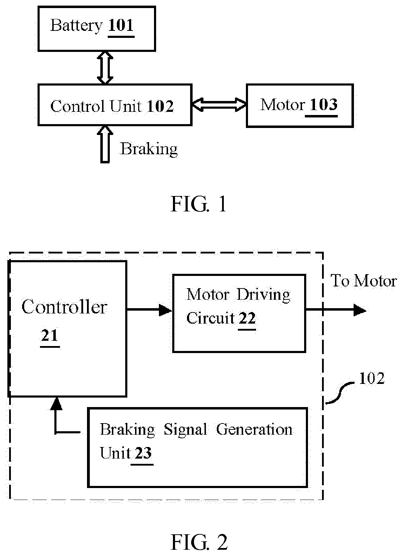

First, a motor system 100 of the present invention is described with reference to Fig. 1. Fig. 1 shows a structural block diagram of the motor system with power generation and braking functions for a bicycle. As shown in Fig. 1, the motor system comprises a battery 101, a control unit 102, and a motor 103. The battery 101 is a rechargeable battery such as a lithium ion battery, a lead acid battery, or the like. Electric energy stored in the battery is configured to supply power to the motor 103, the control unit 102, and other electric equipment such as a lamp and the like on the bicycle. The battery 101 is charged when the motor 103 works in a charging mode. The control unit 102 is configured to control the motor 103 to charge the battery 101 in the charging mode of the motor, and to control the motor 103 to work in a braking mode based on a generated braking signal when receiving a user braking operation (e.g., holding a brake handle or the like by a user) to realize braking of the bicycle. In addition, an assisting mode may be set as required. That is, during the riding of the bicycle, the motor 103 converts the electric energy supplied by the battery 101 into mechanical energy by an electromagnetic induction principle to assist wheels in rotating. For example, the motor 103 is mounted on a wheel axle of the bicycle and works in a power generation mode when the bicycle moves forward normally. That is, mechanical energy generated by the wheel rotation is converted into electrical energy by the electromagnetic induction principle to charge the battery 101. When braking is required, the motor works in the braking mode, and the control circuit 102 controls the motor to quickly stop rotating.

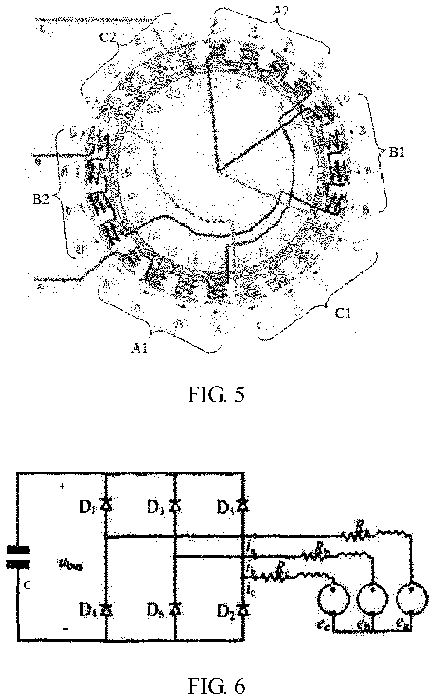

The control unit 102 is configured to control the motor 103 to enable the motor to work in the braking mode or the charging mode. Fig. 2 shows a structural block diagram of a control circuit according to a preferred embodiment of the present invention. As shown in Fig. 2, the control unit 102 comprises a controller 21 and a motor driving circuit 22. The controller 21 is, for example, a single chip microcomputer, a programmable logic control device or the like, and is configured to implement a common control function. The motor driving circuit 22 is configured to generate a signal for driving the motor according to the control of the controller 21. The motor driving circuit 22 comprises, for example, an inverter circuit (as shown in Fig. 6, which will be described hereinafter). Further preferably, the control unit 102 also comprises a braking signal generation unit 23, specifically, for example, a braking breaker, which is configured to generate a braking signal according to a user braking operation and output the signal to the controller 21; and accordingly, the controller 21 outputs a control signal to the motor driving circuit 22, so that the motor 103 works in the braking mode.

It should be noted that the above-described control unit 102 is merely an example, and the control circuit of the motor 103 may be selected as required. For example, the control circuit may be an existing integrated motor driver (an SoC motor driver, etc.).

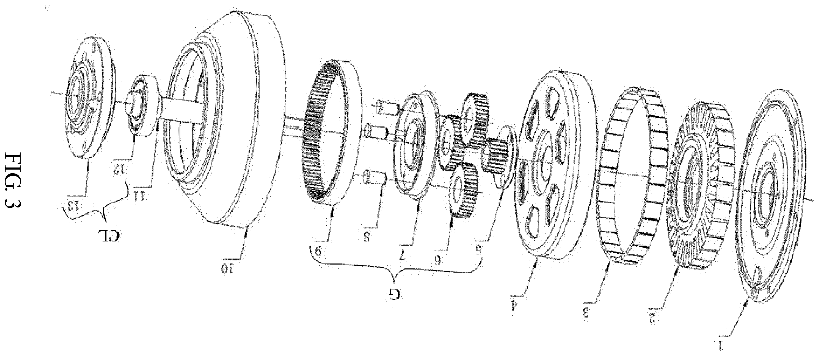

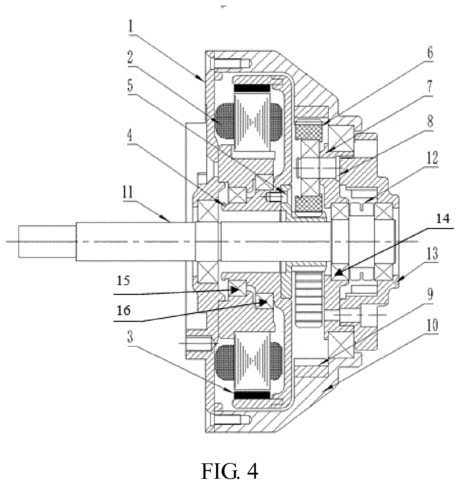

The motor 103 may adopt a DC generator (for example, a brushed DC motor or a brushless DC motor), or may adopt an alternating current (AC) generator (e.g., a single-phase AC motor, a three-phase AC motor, or the like). But, preferably, the motor adopts a permanent magnet brushless DC motor. A specific structure of the permanent magnet brushless DC motor suitable for the above-described motor system according to a specific embodiment of the present invention will be described in detail with reference to Figs. 3 and 4.

Fig.3 is an exploded view of a structure of a permanent magnet brushless DC motor according to a preferred embodiment of the present invention. Fig. 4 is an axial section view of the permanent magnet brushless DC motor according to a preferred embodiment of the present invention.

As shown in Fig. 3, the permanent magnet brushless DC motor (hereinafter referred to as a motor) in this embodiment comprises a clutch unit CL, a planetary gear train G, a magnetic steel 3, a rotor 4, and a stator 2. The clutch unit CL is fixed to a main axle 11; and as the motor is arranged on a wheel axle of a vehicle in a sleeving manner, for example, the main axle may be a wheel axle of the bicycle. The clutch unit CL is configured to transmit a rotational torque between the planetary gear train G and the main axle 11. The planetary gear train G drives the rotor 4 to rotate through the rotational torque transmitted from the clutch unit CL or transmits the rotation of the rotor 4 to the clutch unit CL. A plurality of coils (as shown in Fig. 5) is wound round the stator 2, and distributed at a predetermined phase. The magnetic steel 3 is fixed to the rotor 4 and rotates around the stator. Therefore, when the motor 103 works in the charging mode and the rotor 4 moves relatively to the stator 2, an induced current is generated in the coils based on the electromagnetic induction principle to charge the battery 101. When the motor 103 works in the braking mode and the rotor 4 moves relatively to the stator 2 (which is equivalent to magnetic field lines cut by a conductor), an induced current is generated within the conductor according to the electromagnetic induction principle. Meanwhile, the induced current generates another induced magnetic field; there is an acting force between the induced magnetic field and the existing induced magnetic field; the direction of the acting force is opposite to a rotation direction of the rotor; that is, the acting force prevents the movement of the rotor relative to the stator; and the acting force is a braking force. Particular operations of using the braking force by the motor to brake are specifically described hereinafter.

Further preferably, the motor 103 also comprises a housing, which is made of, for example, a resin material, so long as it can enclose and protect all of the above-mentioned components. In the embodiment of the present invention as shown in Figs. 3 and 4, the housing preferably comprises a hub 10 and an end cap 1. The hub 10 is approximately bowl-shaped, and the inner space thereof is configured to accommodate the above-described components, thereby forming a compactly integral structure of the motor. A bowl-shaped opening of the hub is sealed by the end cap 1 in a manner of, for example, thread connection, riveting, welding or the like, so that the housing forms a closed space.

By using the planetary gear train as the transmission structure, the motor with the above-described structure is characterized in that the structure is compact, the size in the axial direction is small, the braking effect is reliable, the system is simple to maintain, and the battery is charged while braking, so that an energy-saving purpose is achieved. The particular structure of each component will be described in detail below.

Preferably, the clutch unit CL comprises a clutch 12 and a clutch bracket 13. The clutch 12 is in fit connection with the main axle 11 in a manner that an inner ring of the clutch is fixed onto the main axle 11. For example, the fixation manner may be interference fit, thread connection, welding or the like. The clutch bracket 13 is fixed onto an outer ring of the clutch 12 in a manner of, for example, interference fit, thread connection, welding or the like, so that when the inner and outer rings of the clutch are in a meshed state, the clutch bracket can rotate along with the clutch 12. Meanwhile, the clutch bracket 13 is fixed to a planetary gear carrier 7 of the planetary gear train G in a manner of, for example, thread connection or the like, so that the clutch unit CL can transmit the rotational torque between the main axle 11 and the planetary gear train G. That is, when the motor 103 works in the charging mode, the rotation of the main axle 11 can be transmitted to the planetary gear train G. When the motor 103 works in the braking mode, a torque, opposite to a rotation direction of the main axle 11, of the planetary gear train can be transmitted to the clutch unit CL.

It should be noted that as shown in Fig. 3, in order to reduce a manufacturing cost, the clutch unit CL is formed in a manner that the clutch 12 and the clutch bracket 13 are arranged separately. However, this manner is merely exemplary. Alternatively, the clutch and the clutch bracket may be integrally formed. That is, the clutch bracket fixedly connected to the planetary gear train G is formed on the outer ring of the clutch, as long as the rotational torque between the main axle 11 and the planetary gear train G can be transmitted.

Preferably, the planetary gear train G comprises a sun gear 5, planetary gears 6 which perform planetary rotation around the sun gear 5, a planetary gear carrier 7, and an inner gear ring 9. As shown in Fig. 3, the three planetary gears 6 rotate around the planetary shafts 8 formed on the planetary gear carrier 7 respectively while performing planetary rotation around the sun gear 5. The planetary shafts 8 are respectively corresponding to the three planetary gears 6 and pass through shaft holes respectively formed in corresponding positions of the planetary gear carrier 7 so as to rotatably support the corresponding planetary gears 6. It should be noted that the numbers of the shown planetary gears 6 and the planetary shafts 8 are merely exemplary, and are not limited thereto. The planetary gear carrier 7 is fixed to the clutch unit CL relatively, and particularly, is fixed to the clutch bracket 13 in the clutch unit CL. As described above, through this manner, the rotational torque between the main axle 11 and the planetary gear train G can be transmitted. Meanwhile, the planetary gear carrier 7 is supported by a bearing 14 around the main axle 11, and thus is rotatable around the main axle 11. The inner gear ring 9 is fixed relatively to the main axle 11, and may be fixed to, for example, the housing or any other suitable position. The sun gear 5 is arranged on the main axle 11 in a sleeving manner and is meshed with the planetary gears 6. Meanwhile, the sun gear 5 is fixedly connected to the rotor 4 in a manner of, for example, thread connection, so that the rotor 4 and the sun gear 5 rotate or stop rotating together.

The magnetic steel 3 is fixed to the rotor 4 through one of various feasible fixing manners, such as pressing by an aluminum pressing bar, and the like. The magnetic steel 3 is made of, for example, a neodymium-iron-boron material, is preferably ring-shaped, and is arranged on the outer periphery of the stator 2 in a sleeving manner, so that when the magnetic steel rotates relatively to the stator 2, coils wound round the stator 2 can sense the change of a magnetic field on the magnetic steel 3, thereby generating a corresponding induced electromotive force. The rotor 4 and the sun gear 5 are fixed in a manner of, for example, thread connection, riveting, welding, or the like. The rotor 4 is in a shape of a dish with a flat bottom substantially, and a through hole is formed in the center of the bottom of the dish for the main axle 11 to pass; a stepped cylindrical protrusion axially protruding towards the side of the end cap 1 is formed at the through hole; and the inner diameter of the cylindrical protrusion is constant, but the outer diameter thereof is gradually reduced towards the direction of the end cap 1. As shown in Fig. 4, bearings 15 and 16 are arranged on outer sides of a large diameter portion and a small diameter portion of the stepped cylindrical protrusion, respectively, so that the rotor 4 is rotatably supported and rotates relatively to the stator 2. Preferably, the bottom of the dish-shaped rotor 4 is sunken towards the side of the end cap 1 to accommodate a part of the sun gear 5 and to fix the sun gear 5 to the larger diameter potion of the rotor 4, for example, at a part of the rotor 4 where a screw is screwed. Therefore, the arrangement of the components of the motor 103 can be more compact and the axial width thereof can be shortened.

It should be noted that the shape of the rotor 4 and the arrangement of the bearings 15 and 16 are merely exemplary, and the shape of the rotor 4 and the positions and the number of the bearings may be arranged as required. In addition, the rotor 4 and the sun gear 5 may be integrally formed, rather than being fixed in the described thread connection manner.

As shown in Fig. 5, a plurality of bobbins is formed on the outer periphery of the stator 2, and coils are wound round the bobbins in a grouped and predetermined phase interval manner. In Fig. 5, there are three groups of coils A, B and C, each of which comprises a first subgroup coil and a second subgroup coil distributed at an interval in sequence. Particularly, as shown in Fig. 5, the winding operation is started from the coil group A. First, the first subgroup coil A1 of the group A is wound; then, the first subgroup coil C1 of the coil group C is wound; next, the first subgroup coil B1 of the coil group B coil is wound; and finally, the second subgroup coil A2 of the coil group A, the second subgroup coil C2 of the coil group C, and the second subgroup coil B2 of the coil group B are wound in sequence. Through the above arrangement, there is a predetermined phase difference, for example, 60 degrees, of currents between the coils. The above description of the coils is merely exemplary, and the coils may adopt a four-phase form, a five-phase form, or the like. In the present invention, the coils are exemplified only by the three-phase star arrangement manner.

The specific implementation process of the charging mode and the braking mode of the motor according to the present invention will be described below.

### [Braking process]

As an auxiliary braking device for a vehicle, the motor performs a braking operation after receiving a braking signal from a user. Particularly, after the user operates, for example, a hand brake, the braking signal generation unit 23 generates a braking signal according to the braking operation and sends the signal to the controller 21; and the controller 21 controls the motor driving circuit 22. Particularly, as shown in Fig. 6, in six switch tubes of an inverter circuit of the motor driving circuit 22, three switch tubes D2, D4 and D6 on the half of a bridge are switched on, and the other three switch tubes D1, D3 and D5 on the other half of the bridge are switched off. In this way, magnetic fields generated in the coils of the stator 2 form a loop among adjacent bobbins, air gaps and the rotor 4. At this time, if movement of the rotor 4 relative to the stator 2 exists (which is equivalent to magnetic field lines cut by a conductor), an induced current is generated inside the coils according to the electromagnetic induction principle. Meanwhile, the induced current generates another induced magnetic field; there is an acting force between the induced magnetic field and the existing induced magnetic field; and the direction of the acting force is opposite to a movement direction of the rotor 4 relative to the stator 2, and the acting force is a braking force.

The braking force acts between the stator 2 and the magnetic steel 3. According to the above description of the structure of the motor 103, as the magnetic steel 3 is fixed to the rotor 4, the braking force also acts on the rotor 4; and the sun gear 5 is fixed to the rotor 4, and the planetary gears 6 are supported by the planetary shafts 8 to perform planetary rotation around the sun gear 5, so that under the action of the braking force, the planetary gear carrier 7 decelerates around the sun gear 5. If the braking force is F, and a gear ratio of the inner gear ring 9 to the sun gear 5 in the planetary gear train G is a, a transmission ratio of the gear train is a+1, and a baking force transmitted to the planetary gear carrier 7 is F*(a+1). Further, since the planetary gear carrier 7 is fixed to the clutch bracket 13, and the clutch bracket 13 is fixed to the main axle 11, for example, the wheel axle, the braking force acting on the wheel axle is also F*(a+1). That is, the motor 103 realizes the braking operation of the vehicle through the braking force.

### [Charging process]

In a travelling process of the vehicle (for example, the bicycle), the main axle 11 (for example, the wheel axle) rotates, and the clutch unit CL rotates together with the main axle as the clutch unit CL is fixed to the main axle. The planetary gear carrier 7 and the clutch bracket 13 are fixed together, so the planetary gear carrier 7 rotates, and the planetary gears 6 supported by the planetary shafts 8 are driven to rotate. The planetary gears 6 are meshed with the sun gear 5, and the sun gear 5 rotates in cooperation with the planetary gears 6, so that the rotor 4 fixed to the sun gear is further driven to rotate. Since the magnetic steel 3 is fixed to the rotor 4, the magnetic steel rotates together with the rotor 4.

At this time, the coils wound round the stator 2 sense the change of the magnetic field, so as to generate an induced current therein, and the induced current is further transmitted to the battery 101 through a wire to charge the battery.

The motor provided by the present invention as well as the charging mode and the braking mode thereof is described above. By arranging the planetary gear train in the motor as a transmission structure, the rotation of the wheel axle is transmitted to the planetary gear train through the clutch unit, so that the rotor moves relatively to the stator to charge the battery. Meanwhile, after a user braking operation is received, the motor is controlled to enable the rotor to move relatively to the stator, so as to generate an induced current in the coils, and further, the acting force preventing the rotation of the wheels is generated to brake the vehicle. The motor with the above-described structure has the beneficial effects that the structure is compact, the size in the axial direction is small, the braking effect is reliable, the system is simple to maintain, and the battery is charged while braking, so that an energy-saving purpose is achieved.

The foregoing descriptions are only embodiments of the present invention, and do not intend to limit the present invention. It should be appreciated by those skilled in the art that any modification, change, variation, equivalent substitution and improvement that fall within the spiritual and principle of the present invention should be embraced by the protective scope of the present invention.

### [Reference numeral]

1: end cap; 2: stator; 3: magnetic steel; 4: rotor; 5: sun gear; 6: planetary gear; 7: planetary gear carrier; 8: planetary shaft; 9: inner gear ring; 10: hub; 11: main axle; 12: clutch; 13: clutch bracket; 14, 15 and 16: bearings; CL: clutch unit; and G: planetary gear train.

## Claims

1. A motor for a vehicle, **characterized in** comprising: a clutch unit, a planetary gear train, a rotor, a magnetic steel and a stator fixedly connected with the magnetic steel,
wherein the clutch unit is fixed to a wheel axle of the vehicle, and configured to transmit a rotational torque between the wheel axle and the planetary gear train;
the planetary gear train is arranged on the wheel axle of the vehicle in a sleeving manner and capable of driving the rotor to rotate by using force transmitted from the clutch unit, or transmitting the rotation of the rotor to the clutch unit;
the magnetic steel is fixed to the rotor, and rotates or stops rotating with a sun gear in the planetary gear train together;
a plurality of coils is wound round the stator, and an induced current is generated in the coils when the rotor rotates relatively to the stator;
during travelling of the vehicle, the motor is configured to charge a battery of the vehicle by utilizing a first induced current generated in the coils through the movement of the rotor relative to the stator; and during braking of the vehicle, the motor utilizes a second induced current generated in the coils through the movement of the rotor relative to the stator, and an induced magnetic field further generated through the second induced current is used to brake the vehicle.

2. The motor of claim 1, wherein the bottom of the rotor is sunken towards the side far away from the sun gear to accommodate part of the sun gear.

3. The motor of claim 1 or 2, wherein the clutch unit comprises a clutch and a clutch bracket; and an outer ring of the clutch and the clutch bracket are fixedly connected or integrally formed.

4. The motor of any of claims 1-3, wherein the planetary gear train comprises the sun gear, a planetary gear, a planetary gear carrier and an inner gear ring;
the planetary gear is supported by a planetary shaft arranged on the planetary gear carrier, and performs planetary rotation around the sun gear; and the planetary gear carrier is fixed to the clutch unit, so as to transmit a rotational torque between the planetary gear and the clutch unit.

5. The motor of any of claim 3, wherein the planetary gear train comprises the sun gear, a planetary gear, a planetary gear carrier and an inner gear ring;
the planetary gear is supported by a planetary shaft arranged on the planetary gear carrier, and performs planetary rotation around the sun gear; and the planetary gear carrier is fixed to the clutch bracket, so as to transmit a rotational torque between the planetary gear and the clutch unit.

6. The motor of claim 4 or 5, wherein the sun gear and the rotor are fixed or integrally formed.

7. The motor of any of claims 1-6, wherein the magnetic steel is annular and arranged on the outer periphery of the stator in a sleeving manner, so that an induced current is generated in the coils when the rotor moves relatively to the stator.

8. The motor of any of claims 1-7, wherein a plurality of bobbins is arranged on the stator in the axial direction thereof, and the coils are wound round the bobbins.

9. A motor system, comprising:
the motor of any of claims 1-8, and
a control unit configured to control the motor to charge the battery of the vehicle or to brake the vehicle.

10. A braking and charging method using the motor system of claim 9, comprising:
rotating a wheel axle of the vehicle during travelling of the vehicle, and transmitting the rotation of the wheel axle by the clutch unit to the planetary gear train to further drive the rotor to rotate; sensing by the coils on the stator a change of a magnetic field to generate a first induced current in the coils, and charging the battery with the first induced current;
during performing a braking operation, controlling the motor by the control unit, so that a second induced current generated in the coils generates another induced magnetic field when the rotor moves relatively to the stator, and a braking force for preventing the movement of the rotor relative to the stator is generated between the induced magnetic field and an existing magnetic field; and
enabling the rotor to decelerate using the braking force, transmitting the deceleration movement to the clutch unit by the planetary gear train, and transmitting by the clutch unit the deceleration movement to the wheel axle of the vehicle to realize a braking operation.
